# EUROPÄISCHE PATENTANMELDUNG

(11) **EP 0 997 623 A1**
(43) Veröffentlichungstag der Anmeldung: **03.05.2000**
(21) Anmeldenummer: 99121386.9
(22) Anmeldetag: 27.10.1999
(51) Int. Cl.: F02B 25/14, F02B 33/04, F02B 17/00

(54) **Ansaugvorrichtung für Zweitaktverbrennungsmotoren**

(30) Priorität: 31.10.1998 DE 19850244
(71) Anmelder: Förster, Guido, 52152 Simmerath (DE)
(72) Erfinder: Förster, Guido, 52152 Simmerath (DE)
(74) Vertreter: Metz, Siegfried

(57) **Zusammenfassung**

Bei kurbelgehäuse-gespülten Zweitaktverbrennungsmotoren wird das Frischgas durch das Kurbelgehäuse angesaugt und dort von der örtlichen Wärme aufgeheizt. Dies wirkt sich bekanntlich negativ auf die Füllung des Motors aus. Die zusätzliche Ansaugvorrichtung befördert kaltes, nicht aufgeheiztes Frischgas, direkt vom Vergaser zum Spülschlitz, verbessert somit die Füllung und setzt die Selbstzündungsgefahr herab. .

Die zusätzliche Ansaugvorrichtung (siehe Figur 1) befindet sich auf dem Ansaugstutzen 6 zwischen Vergaser 4 und Membrangehäuse 5 und ist an allen Spülkanälen 7, 8, 9, 10 und am Stützkanal 3 angeschlossen. Da beim Ansaugen überall gleicher Unterdruck herrscht, öffnet sich die Membran 2 in der zusätzlichen Ansaugvorrichtung 1. So wird das Kurbelgehäuse umgangen. Ein Teil der Frischgase wird nicht negativ erhitzt und gelangt so, kalt, direkt zum Spülschlitz 11.

Die zusätzliche Ansaugvorrrichtung eignet sich aufgrund der Füllungsverbesserung für jeden in Serie gebauten Zweitaktverbrennungsmotor, insbesondere aber für Rennsportmotoren. Sie kann an jedem Zweitaktverbrennungsmotor, sowohl an membrangesteuerten, als auch an schlitzgesteuerten oder plattendrehschiebergesteuerten Zweitaktverbrennungsmotoren, verwandt werden.

## Beschreibung

Die Erfindung betrifft eine Ansaugvorrichtung eines kurbelgehäuse-gespülten Zweitaktverbrennungsmotors, bei dem ein Teil des im Vergaser erzeugten Brennstoff/Luftgemisches, im folgenden als Frischgas bezeichnet, unter Umgehung des Kurbelgehäuses in den Zylinderraum eingeführt wird.

Es ist bekannt, daß bei kurbelgehäuse-gespülten Zweitaktverbrennungsmotoren das Frischgas durch den im Kurbelgehäuse erzeugten Unterdruck angesaugt wird. Dadurch, daß sich Kurbelgehäuse und Kurbelwelle aufheizen, wird auch das Frischgas aufgeheizt, dehnt sich aus und verschlechtert die Füllung des Motors.

Aus US-PS-4,194,470 ist es bekannt, bei einem Zweitaktmotor einen Teil des Frischgases nicht durch das Kurbelgehäuse, sondern in einer Umgehungsleitung gesondert in den Zylinderraum einzuleiten. Dieser Frischgasanteil kann sich daher nicht erwärmen und bleibt im Gegensatz zu dem durch das Kurbelgehäuse strömenden Frischgas kalt. Gemäß dieser Druckschrift wird der kalte Frischgasanteil in dem Zeitraum, in dem der Kolben im unteren Totpunkt steht, gesondert in den Zylinderraum eingeführt und zusammen mit Frischgas, das erwärmt aus dem Kurbelgehäuse zuströmt, im Zylinderraum komprimiert. Zum Einleiten des kalten Frischgases aus dem Vergaser wird dabei der Unterdruck im Zylinderraum ausgenutzt, der beim Ausströmen von verbranntem Abgas aus dem Zylinderraum bei offenem Auslaßschlitz entsteht. Bei derartigem Ansaugen des Frischgases ist mit Gemischverlusten zu rechnen. Ein Teil des noch unverbrannten Frischgases wird mit dem Abgas abgeführt werden. Nachteilig ist auch, daß der Anteil des kalt in den Zylinderraum einströmenden Frischgases nicht ausreichend dosierbar ist und erforderlichen Ansprüchen nicht genügt.

Aufgabe der Erfindung ist es, Vorkehrungen zu treffen, um die Menge des einzuführenden kalten Frischgases optimieren zu können und das kalte Frischgas zugleich effektiv in den Zylinderraum einzuleiten.

Gemäß der Erfindung wird diese Aufgabe bei einem Zweitaktmotor der vorgenannten Art dadurch gelöst, daß das einzuführende kalte, nicht aufgeheizte Frischgas von einer zusätzlichen Ansaugvorrichtung zum Spülschlitz am Zylinderraum geleitet wird. Mit "Spülschlitz" werden vom Motorfachmann die zum Zylinderraum hin offenen Mündungen der Spülkanäle bezeichnet, die zur Zufuhr von Frischgas dienen. Der kalte Frischgasanteil wird somit gemäß der Erfindung unmittelbar an der Mündungsstelle einer bereits vorhandenen Frischgas-Zufuhrleitung eingeführt und gelangt auf dem gleichen Wege in den Zylinderraum, wie das aufgeheizte Frischgas normaler Weise aus dem Kurbelgehäuse einströmt. Durch diesen Anschluß der zusätzlichen Ansaugvorrichtung an einem Spülschlitz eines Spülkanals wird in vorteilhafter Weise erreicht, daß beim Aufwärtsgang des Kolbens, bei dem bei einem kurbelgehäuse-gespülten Zweitaktmotor im gasdicht abgedichteten Kurbelgehäuse Unterdruck entsteht und Frischgas aus dem Vergaser in das Kurbelgehäuse angesaugt wird, infolge des erzeugten Unterdrucks auch die zusätzliche Ansaugvorrichtung, die mit den Spülkanälen und dem Kurbelgehäuse räumlich verbunden ist, aus dem Vergaser mit Frischgas gefüllt wird. Gemäß der Erfindung wird somit der das heiße Kurbelgehäuse umgehende und somit kalt bleibende Frischgasanteil zusammen mit dem wie bisher in das Kurbelgehäuse eingeführten übrigen Frischgas aus dem Vergaser angesaugt. Zum Ansaugen wird das vorhandene Ansaugsystem des Zweitaktmotors ausgenutzt, es kann - bis auf die zusätzlich anzubringende Ansaugvorrichtung - ohne Änderung beibehalten werden.

Bei einer Abwärtsbewegung des Kolbens strömt dann nach Öffnen des Spülschlitzes der kalte Frischgasanteil aus der zusätzlichen Ansaugvorrichtung unmittelbar in den Zylinderraum ein, bevor das übrige erwärmte Frischgas aus dem Kurbelgehäuse gegebenenfalls zusammen mit restlichem kalten Frischgas aus der zusätzlichen Ansaugvorrichtung in den Zylinderraum eingeführt wird. Dies kühlt Kolbenboden und Zylinderkopf. Das in den Zylinderraum einströmende kalte Frischgas wird so zum Betrieb des Zweitaktmotors effektiv genutzt. Insgesamt weist das zu komprimierende Frischgasgemisch eine niedrigere mittlere Temperatur auf, als bei bekannten Zweitaktmotoren. Der Füllgrad des Zylinderraums ist somit angehoben und die Gefahr einer Selbstzündung des Frischgasgemisches herabgesetzt. Die zugeführte kalte Frischgasmenge kann mittels der Ansaugvorrichtung vorgegeben werden, insbesondere durch Dimensionieren der Sammelräume für Frischgas in der Ansaugvorrichtung und durch Wahl ihrer Membranen.

Bevorzugt mündet die zusätzliche Ansaugvorrichtung im Mündungsbereich aller Spülkanäle des Zweitaktmotors.

Die mit der Erfindung erzielten Vorteile bestehen insbesondere darin, daß die Füllung des Motors verbessert wird und damit auch die Leistung des Motors. Die strömungsbedingt schlechter gefüllten Stellen der Spülkanäle im Zylinder können jetzt durch gezieltes Anbringen der zusätzlichen Ansaugvorrichtung nochmals besser gefüllt werden. Ein weiterer Vorteil besteht darin, daß der Kolbenboden und der Zylinderkopf besser gekühlt werden und somit die Gefahr der Selbstzündung (Detonation) insbesondere bei hochverdichteten Rennsportmotoren abgesenkt wird, womit der Motor gleichzeitig standfester wird. Die zusätzliche Ansaugvorrichtung kann bei allen Zweitaktverbrennungsmotoren, also sowohl schlitzgesteuerten, als auch membran- und drehschiebergesteuerten Zweitaktverbrennungsmotoren, angewandt werden.

Die Erfindung und weitere Ausgestaltungen der Erfindung werden anhand eines in der Zeichnung schematisch dargestellten Ausführungsbeispiels näher erläutert. Es zeigen im einzelnen:
- Figur 1: Membrangesteuerter Zweitaktmotor mit zusätzlicher Ansaugvorrichtung beim Ansaugen von Frischgas,
- Figur 2: Seitliche Anordnung der zusätzlichen Ansaugvorrichtung an Spülkanälen und hinterem Stützkanal,
- Figur 3: Schnitt durch Zylinderraum und Kurbelgehäuse eines Zweitaktverbrennungsmotors mit zusätzlicher Ansaugvorrichtung nach Figur 1 gemäß Schnittlinie III/III nach Figur 5 bei Aufwärtsbewegung des Kolbens,
- Figur 4: Schnitt durch Zylinder und Kurbelgehäuse wie Figur 3 bei Stellung des Kolbens im unteren Totpunkt,
- Figur 5: Schnitt durch Zylinder und Kurbelgehäuse gemäß Schnittlinie V/V nach Figur 3.
- Figur 6: Ausschnitt des Zylinders gemäß Schnittlinie VI/VI nach Figur 3 mit Verlauf der Spülkanäle im Zylinder.

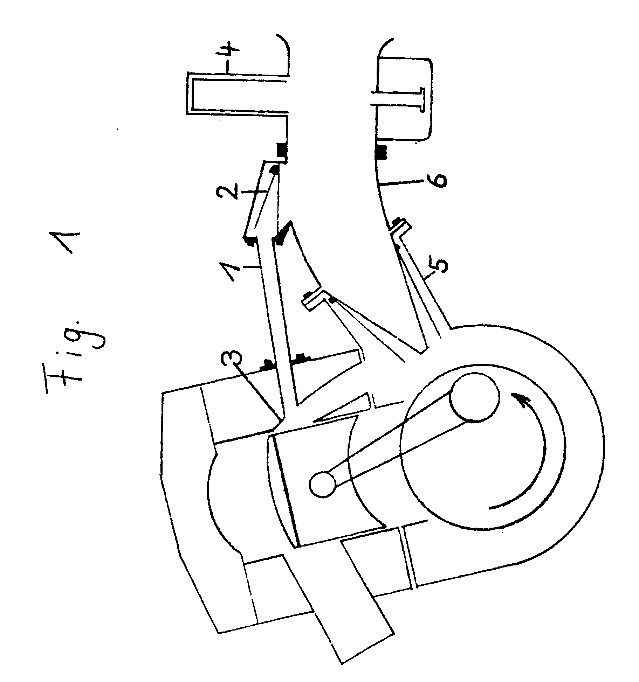

Der in Figur 1 dargestellte membrangesteuerte Zweitaktmotor zeigt eine zusätzliche Ansaugvorrichtung 1, die sich auf einem Ansaugstutzen 6 zwischen Vergaser 4 und Membrangehäuse 5 befindet, und ihre Anordnung am hinteren Stützkanal 3. Wie dargestellt, befindet sich der Motor beim Ansaugen von Frischgas. Durch den überall gleich herrschenden Unterdruck im Kurbelgehäuse, in den Spülkanälen und der zusätzlichen Ansaugvorrichtung kann sich eine in der zusätzlichen Ansaugvorrichtung befindliche Membran 2 öffnen. Bei diesem Vorgang gelangt das Frischgas direkt vom Vergaser über die zusätzliche Ansaugvorrichtung zum Spülschlitz. Das durch die zusätzliche Ansaugvorrichtung angesaugte Frischgas umgeht so das Kurbelgehäuse und wird nicht nachteilig aufgeheizt.

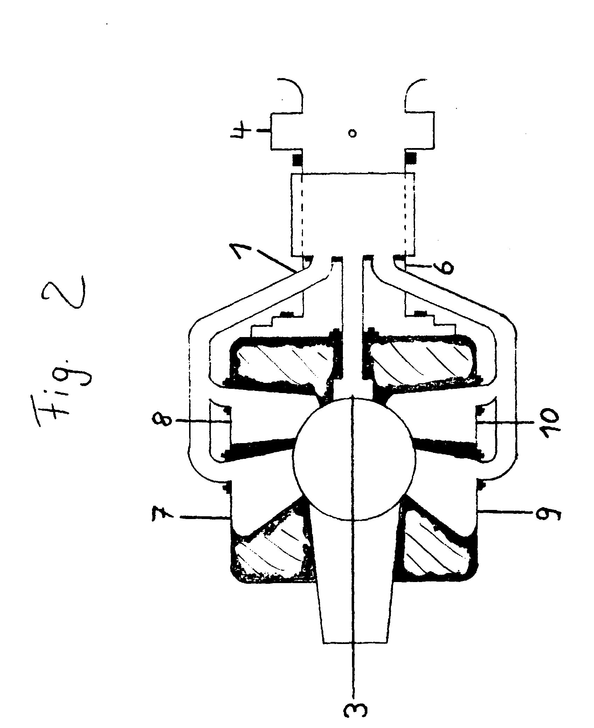

Der in Figur 2 dargestellte Zylinder mit Ansaugstutzen 6, Vergaser 4 und zusätzlicher Ansaugvorrichtung 1 zeigt die Anordnung der zusätzlichen Ansaugvorrichtung an Spülkanälen 7, 8, 9, 10 und am hinteren Stützkanal 3.

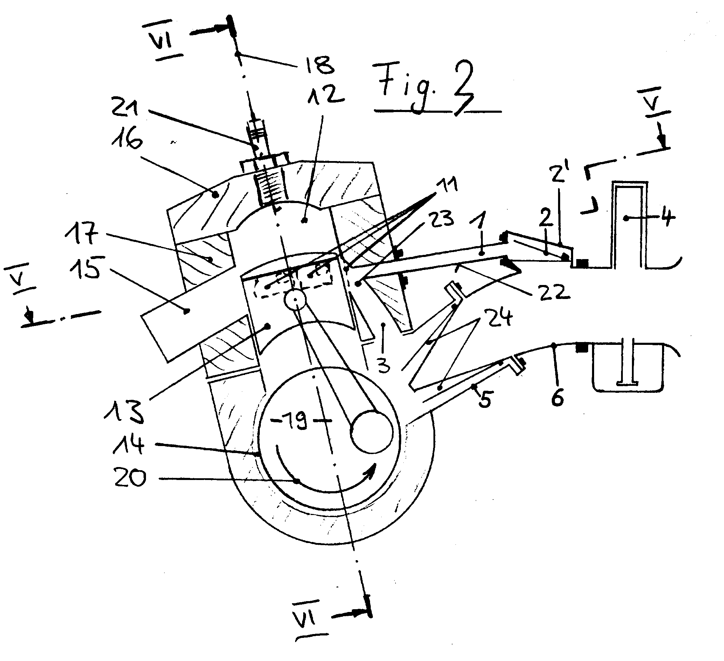

In Figuren 1 und 3 befindet sich Kolben 13 des Zweitaktmotors in Drehrichtung 20 der Kurbelwelle 19 in seinem Aufwärtsweg. Dabei wird das im Zylinderraum 12 vorhandene Frischgas komprimiert und - infolge des erzeugten Unterdrucks im Kurbelgehäuse 14 - zugleich Frischgas aus dem Vergaser 4 ins Kurbelgehäuse angesaugt. Mit Frischgas füllt sich hierbei auch die zusätzliche Ansaugvorrichtung 1, die, wie im Ausführungsbeispiel gezeigt, durch ihren Anschluß sowohl am hinteren Stützkanal 3 als auch an den Spülkanälen 7, 8, 9, 10 räumlich mit dem Kurbelgehäuse 14 verbunden ist und somit unter Unterdruck steht, so daß sich die Membran 2 im Membrangehäuse 2' am Eingang der Ansaugvorrichtung 1 öffnet. Über die somit membrangesteuerte Ansaugvorrichtung 1 dringt das Frischgas unter Umgehung des Kurbelgehäuses 14 bis zum Mündungsbereich 23 von Stützkanal 3 und Spülkanälen 7, 8, 9, 10 und zu den Spülschlitzen 11 in den Mündungsbereichen 23 dieser Kanäle vor. Dieser Frischgasanteil, der das Kurbelgehäuse umgeht, bleibt kalt, während das übrige Frischgas, das in bekannter Weise über sich öffnende Membranen 24 im Membrangehäuse 5 aus dem Vergaser 4 ins Kurbelgehäuse 14 strömt, sich im Kurbelgehäuse erwärmt.

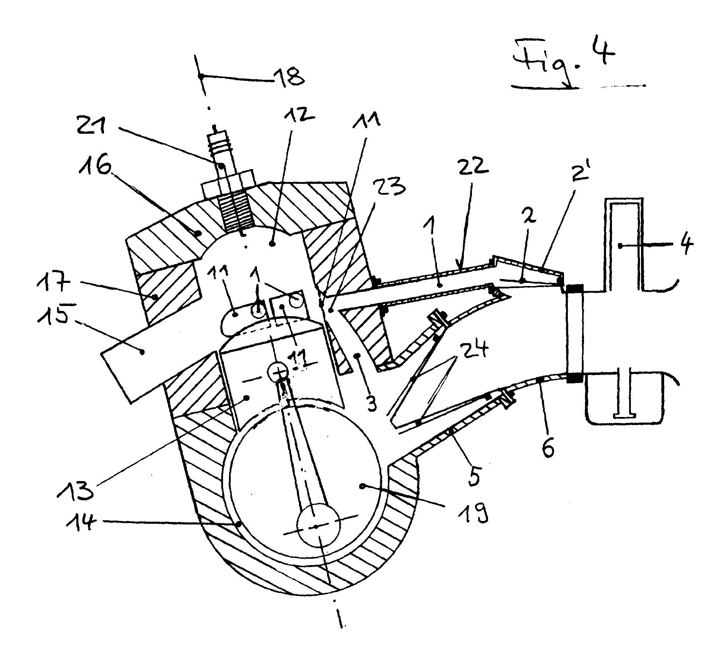

Nach Kompression des im Zylinderraum 12 vorhandenen Frischgases bei der Aufwärtsbewegung des Kolbens 13 im Zylinder 17 und nach Zündung des Frischgasgemisches mittels Zündkerze 21 bewegt sich der Kolben abwärts, gibt dabei die Abgasleitung 15 zum Auslaß verbrannten Abgases frei und erhöht den Druck im Kurbelgehäuse 14. In seiner unteren Stellung gibt der Kolben dann, wie in Figur 4 gezeigt ist, den Spülschlitz 11 des hinteren Stützkanals 3 und im Ausführungsbeispiel auch die Spülschlitze 11 der Spülkanäle 7,8,9,10 zum Zylinderraum 12 hin frei. Durch die offenen Spülschlitze strömt das unter Druck stehende Frischgas dann in den Zylinderraum ein. Es wird dabei zunächst das kalte Frischgas aus der zusätzlichen Ansaugvorrichtung 1 eingeführt, anschließend das erwärmte Frischgas aus dem Kurbelgehäuse 14. Dadurch, daß zuerst kaltes Frischgas und im wesentlichen erst anschließend aufgeheiztes Frischgas in den Zylinderraum 12 einströmt, ergibt sich eine sehr effektive Kühlung für Kolbenboden und Zylinderkopf 16.

Das in den Zylinderraum eingeführte Frischgasgemisch weist eine niedrigere mittlere Temperatur auf als bei herkömmlichen Zweitaktmotoren, so daß der Füllgrad angehoben ist und die Gefahr einer Selbstzündung des komprimierten Frischgasgemisches bei erneuter Aufwärtsbewegung des Kolbens 13 herabgesetzt ist.

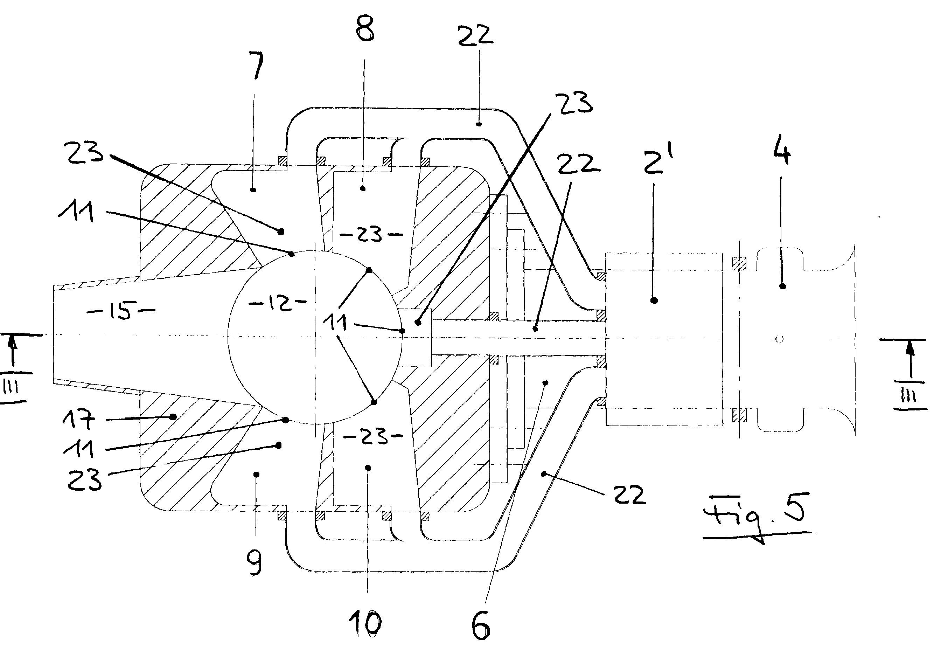

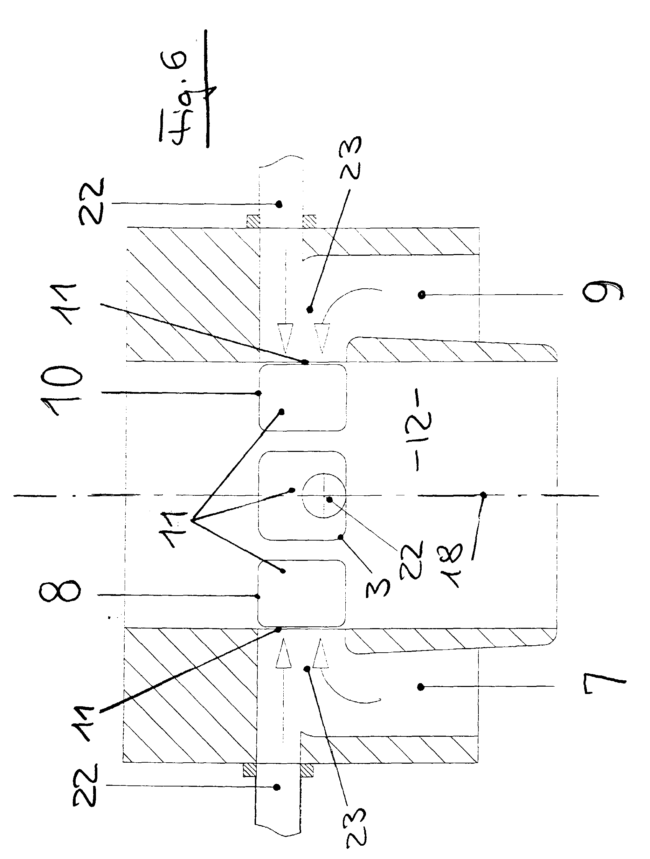

In Figuren 3 und 4 ist der Anschluß der zusätzlichen Ansaugvorrichtung am hinteren Stützkanal 3 dargestellt. Der Anschluß ist derart, daß die vom Stützkanal bewirkte Umkehrspülung nicht beeinträchtigt wird. Hierzu endet ein von der Ansaugvorrichtung 1 zum Stützkanal geführter Frischgaskanal 22 für kaltes Frischgas mit geringem Abstand vom Spülschlitz 11. Die zusätzliche Ansaugvorrichtung weist mehrere Frischgaskanäle 22 für kaltes Frischgas auf, vgl. Figuren 5 und 6. Die Frischgaskanäle verzweigen sich hinter dem Membrangehäuse 2' und münden in den Spülkanälen 7, 8, 9, 10 in ihren Mündungsbereichen 23 am Ende der Spülkanäle, wie vor allem aus Figur 6 ersichtlich ist. Die Spülkanäle und ihre Mündungsbereiche sind symmetrisch zur Zylinderachse 18 angeordnet.

Die Erfindung ist selbstverständlich nicht auf das dargestellte Ausführungsbeispiel beschränkt. Insbesondere sind die Anschlüsse der Frischgasleitungen für kaltes Frischgas am hinteren Stützkanal oder den Spülkanälen variabel: Sie sind jedoch in jedem Falle derart gestaltet, daß sich im Mündungsbereich der Spülkanäle beim Ansaugen von Frischgas aus dem Vergaser unter Umgehung des Kurbelgehäuses kaltes Frischgas sammeln kann, das dann in den Zylinderraum vor erwärmtem Frischgas aus dem Kurbelgehäuse einströmen kann.

### Bezugszeichenliste

- zusätzliche Ansaugvorrichtung: 1
- Membran: 2
- Membrangehäuse: 2'
- hinterer Stützkanal: 3
- Vergaser: 4
- Membrangehäuse: 5
- Ansaugstutzen: 6
- Spülkanäle: 7,8,9,10
- Spülschlitz: 11
- Zylinderraum: 12
- Kolben: 13
- Kurbelgehäuse: 14
- Abgasleitung: 15
- Zylinderkopf: 16
- Zylinder: 17
- Zylinderachse: 18
- Kurbelwelle: 19
- Drehrichtung: 20
- Zündkerze: 21
- Frischgaskanal für kaltes Frischgas: 22
- Mündungsbereich: 23
- Membranen: 24

## Patentansprüche

1. Ansaugvorrichtung für Zweitaktverbrennungsmotore mit Kurbelgehäuse-Spülung, wobei ein Teil des im Vergaser erzeugten Brennstoff/Luftgemisches, im folgenden als Frischgas bezeichnet, unter Umgehung des Kurbelgehäuses (14) in den Zylinderraum (12) eingeführt wird, dadurch gekennzeichnet, daß der das Kurbelgehäuse umgehende kalte, nicht aufgeheizte Frischgasanteil durch eine zusätzliche Ansaugvorrichtung (1) direkt vom Vergaser (4) zu zumindest einem Spülschlitz (11) gelangt.

2. Ansaugvorrichtung nach Anspruch 1, dadurch gekennzeichnet, daß die zusätzliche Ansaugvorrichtung (1) in allen Spül- und gegebenenfalls vorhandenen Stützkanälen (3,7,8,9,10) des Zweitaktverbrennungsmotors mündet.

3. Ansaugvorrichtung nach Anspruch 1, dadurch gekennzeichnet, daß die zusätzliche Ansaugvorrichtung (1) im zu den Spülschlitzen (11) führenden Mündungsbereich (23) der Spül- und/oder gegebenenfalls vorhandenen Stützkanäle (3,7,8,9,10) des Zweitaktverbrennungsmotors mündet.

4. Ansaugvorrichtung nach Anspruch 1, 2 oder 3, dadurch gekennzeichnet, daß die zusätzliche Ansaugvorrichtung (1) zum Einlaß von kaltem Frischgas aus dem Vergaser (4) eine Membran (2) aufweist.

5. Ansaugvorrichtung nach Anspruch 4, dadurch gekennzeichnet, daß die zusätzliche Ansaugvorrichtung membran-gesteuert ist.

6. Ansaugvorrichtung nach einem der vorhergehenden Ansprüche 1 bis 5, dadurch gekennzeichnet, daß die zusätzliche Ansaugvorrichtung zumindest einen am Membrangehäuse (2') angeschlossenen Frischgaskanal (22) aufweist, der im Mündungsbereich (23) eines Stütz- oder Spülkanals (3,7,8,9,10) endet.
